# EUROPEAN PATENT APPLICATION

(11) **EP 2 733 854 A2**
(43) Date of publication of application: **21.05.2014**
(21) Application number: 12811122.6
(22) Date of filing: 13.07.2012
(51) Int. Cl.: H04B 1/38, G09F 3/08, G02F 1/1333

(54) **PROTECTIVE FILM ATTACHING DEVICE, PROTECTIVE FILM ATTACHING MODULE HAVING SAME, AND METHOD FOR ATTACHING A PROTECTIVE FILM USING THE PROTECTIVE FILM ATTACHING DEVICE**

(30) Priority: 13.07.2011 KR 20110069502; 02.07.2012 KR 20120071981
(71) Applicant: ISTT Co., Ltd., Daegu 702-701 (KR)
(72) Inventor: CHAE, Younghun, Daegu 706-948 (KR)
(74) Representative: Grünecker, Kinkeldey, Stockmair & Schwanhäusser
(86) International application number: PCT/KR2012/005633
(87) International publication number: WO 2013/009149

(57) **Abstract**

An apparatus for attaching a protection film enabling to easily attach a protection film for protecting a display panel of mobile phone or tablet PC, a protection film attaching module comprising the same, and a method of attaching a protection film by using the apparatus for attaching a protection film are disclosed. The apparatus for attaching a protection film is disposed on the electronic device having a display panel to fit the outline shape of the electronic device, includes at least one spacer protruded from the frame horizontally, and at least one protection film holder protruded from the frame to the inner direction horizontally at the higher position than the spacer, which supports the protection film by the protection film being inserted between the spacer and the protection film holder, wherein the outline of the protection film is separated from the display panel of the electronic device by the thickness of the spacer when the frame is mounted on the electronic device.

## Description

### TECHNICAL FIELD

Embodiments relates to an apparatus for attaching a protection film that enables a protection film configured to protect a display panel of smart phone or tablet PC to be attached easily, a protection film attaching module including the same, and a method of attaching a protection film by using the apparatus for attaching protection film.

### BACKGROUND ART

A protection film is used for restraining damage or scratches of a display panel embodied in a device such as mobile phone. Especially, recently, as it is common to use a user interface (UI) using a touch screen with the fashion of smart phone or tablet PC, damage risk of the display panel becomes greater, thereby increasing the use of protection film.

By the way, it is very hard to attach a protection film on a display panel of smart phone, or the like, at the right position without air bubbles unless the protection film is attached by a skilled technician. The protection film at the wrong position may have bad influence on visibility of the display panel and disturb a user interface (UI) by using a touch screen. In case that a protection film fails to be attached at the right position and is detached to be reattached, visibility and adhesive power of the protection film may be degenerated due to contamination of the protection film. Meanwhile, in case that a protection film is not attached due to the difficulty of attaching a protection film, a display panel and an electronic device itself including a display panel, such as smart phone or tablet PC, may have shortened lifespan.

### DETAILED DESCRIPTION OF THE INVENTION

### TECHNICAL GOAL OF THE INVENTION

The inventive concept provides an apparatus for attaching a protection film enabling even unskilled person to attach a protection film on a display panel easily and a protection film attaching module including the same.

The inventive concept also provides a method of attaching a protection film on a display panel by using the apparatus for attaching a protection film.

### TECHNICAL SOLUTION OF THE INVENTION

According to an exemplary embodiment of the inventive concept, an apparatus for attaching a protection film includes a frame that is disposed to fit the outline shape of an electronic device having a display panel and has an opened window inside, at least one spacer protruded from the frame horizontally, and at least one protection film holder protruded from the frame to the inner direction horizontally at the higher position than the spacer and supporting the protection film by inserting the outline of the protection film between the spacer and the protection film holder, wherein the outline of the protection film is separated from the display panel by the thickness of the spacer when the frame is mounted on the electronic device.

At this time, the spacer may be protruded from a vertical wall protruded vertically downward from the outline surface of the frame, horizontally, and the vertical wall may be disposed to be mounted on the outline of the upper surface of the electronic device.

The thickness of the spacer may be 0.5 through 5mm.

The apparatus may further include at least one position guide wall disposed so as the outline of the electronic device to be inserted thereto, such that the frame is mounted on the electronic device to fit the outline shape of the electronic device. At this time, the spacer is protruded from the vertical wall protruded vertically downward from the outline surface of the frame, horizontally, the vertical wall may be disposed to be mounted on the outline of the upper surface of the electronic device, and the position guide wall may be protruded from the outline of the vertical wall more downward than the vertical wall.

Meanwhile, the apparatus may further include an inserting sheet to be laid on the protection film and inserted between the protection holder and the spacer together with the protection film for preventing the protection film from losing its position.

According to another exemplary embodiment of the inventive concept, a protection film attaching module includes the apparatus for attaching a protection film and the protection film to be inserted between the spacer and the protection film holder by the outline, wherein the outline of the protection film is separated from the display panel by the thickness of the spacer when the frame is mounted on the electronic device.

The module further includes a bottom cover preserving adhesion of the bottom of the protection film and an upper cover restraining contamination and damage on the upper surface of the protection film, which are laid on the protection film detachably to be inserted between the spacer and the protection film holder together with the protection film.

At this time, the module may further include an inserting sheet to be inserted between a first spacer and the protection film holder while being laid on the protection film for preventing the protection film from losing its position.

According to yet another exemplary embodiment of the inventive concept, a method of attaching a protection film by using the apparatus for attaching a protection film includes loading a protection film by inserting the protection film between the protection film holder and the spacer so as to be supported by the spacer by the adhesive bottom, mounting the apparatus for attaching a protection film on the electronic device such that the spacer is supported by the electronic device, first attaching the protection film by pushing the center of the protection film to the center of the display panel, separating the apparatus for attaching a protection film from the protection film and the electronic device, and second attaching the protection film attaching the whole region of the protection film by expending the pressure region from the center to the peripheral region of the protection film.

At this time, the loading the protection film includes loading the bottom cover preserving adhesion of the bottom of the protection film and the upper cover restraining contamination and damage of the upper surface of the protection film while being laid on the protection film detachably on the apparatus for attaching a protection film together with the protection film, and the method of attaching a protection film may further include removing the bottom cover from the bottom of the protection film before the mounting the apparatus for attaching a protection film and removing the upper cover from the upper surface of the protection film after the second attaching the protection film.

Also, the loading the protection film includes inserting an inserting sheet laid on the protection film for protecting the protection film from losing its position between the protection film holder and the spacer, and the method of attaching a protection film may further include removing the inserting sheet from the protection film after the separating the apparatus for attaching a protection film.

According to still yet another exemplary embodiment of the inventive concept, an apparatus for attaching a protection film which is configured to attach a protection film to a display unit of a mobile device having a frame with a hollow part to expose the display unit and a protection film mounting unit which is protruded from the inner surface of the frame hollow part, wherein the frame is separated from the display unit by 1 through 4 mm when the frame is mounted on the mobile device.

According to still yet another exemplary embodiment of the inventive concept, a protection film attaching module includes a frame and a protection film. The frame includes a jaw bended to be supported by the outline edge of an electronic device having a display panel and an open window exposing the display panel. The protection film is attached on the frame detachably so as to cover the open window. At this time, the outline of the protection film is separated from the display panel by a certain distance when the jaw is supported by the outline of the electronic device.

According to still yet another exemplary embodiment of the inventive concept, a method of attaching a protection film by using an apparatus for attaching a protection film includes preparing a protection film attaching module comprising an apparatus for attaching a protection film having a frame with a bended jaw and an open window of the size corresponding to a display panel of an electronic device and a protection film attached to the apparatus for attaching a protection film so as to cover the open window. The method includes loading the frame by mounting the jaw on the outline edge of the electronic device such that the protection film may face the display panel while having a distance from the display panel. The method includes attaching the center of the protection film by pushing the center of the protection film to the display panel. The method includes separating the frame from the protection film and the electronic device. The method includes attaching the whole region of the protection film by expanding the pressure region from the center to the peripheral region of the protection film.

### EFFECT OF THE INVENTION

According to an apparatus for attaching a protection film, a protection film attaching module, and a method of attaching a protection film of the inventive concept, a protection film may be attached on the display panel by the exact position without air bubbles easily by a common person even if he is not a skilled technician. As a result, cost for purchasing spare protection films and time for attaching a protection film may be saved.

### BRIEF DESCRIPTION OF THE DRAWINGS

Exemplary embodiments of the inventive concept will be more clearly understood from the following detailed description taken in conjunction with the accompanying drawings in which:
FIG. 1 is an exploded perspective view illustrating an apparatus for attaching a protection film according to an exemplary embodiment of the inventive concept, a module including the same and a smart phone ;
FIG. 2 is a perspective view illustrating a rear view of the apparatus for attaching a protection film of FIG. 1;
FIGS. 3 and 4 are diagrams for explaining a method of attaching a protection film by using the apparatus for attaching a protection film of FIG. 1, which are a cross sectional view of FIG. 1 along the line A-A and a cross sectional view of FIG. 1 along the line B-B, respectively,;
FIG. 5 is a perspective view illustrating removing an upper cover from the protection film being attached to the smart phone ;
FIGS. 6 and 7 are perspective views illustrating an upper surface and a rear surface of the apparatus for attaching a protection film, respectively, according to another exemplary embodiment of the inventive concept;
FIG. 8 is a diagram for explaining a method of attaching a protection film by using the apparatus for attaching a protection film of FIG. 1, which is a cross-sectional view of FIG. 6 along the line C-C;
FIG. 9 is an exploded perspective view illustrating an apparatus for attaching a protection film according to yet another exemplary embodiment of the inventive concept, a module including the same, and a smart phone;
FIG. 10 is a perspective view illustrating a rear view of the frame shown in FIG. 9.
FIG. 11 is a cross-sectional view illustrating a smart phone mounting a protection film attaching module; and
FIG. 12 is a perspective view illustrating removing an upper cover from the protection film being attached to the smart phone.

### BEST MODE FOR CARRYING OUT THE INVENTION

Various example embodiments will be described more fully hereinafter with reference to the accompanying drawings, in which some example embodiments are shown. Inventive concepts may, however, be embodied in many different forms and should not be construed as limited to the example embodiments set forth herein. Rather, example embodiments are provided so that this disclosure will be thorough and complete, and will fully convey the scope of inventive concepts to those skilled in the art. In the drawings, the sizes and relative sizes of layers and regions may be exaggerated for clarity. Like numerals refer to like elements throughout.

It will be understood that, although the terms first, second, third etc. may be used herein to describe various elements, these elements should not be limited by these terms. These terms are used to distinguish one element from another. Thus, a first element discussed below could be termed a second element without departing from the teachings of the inventive concepts. As used herein, the term "and/or" includes any and all combinations of one or more of the associated listed items.

It will be understood that when an element is referred to as being "connected" or "paired" to another element, it can be directly connected or paired to the other element or intervening elements may be present. In contrast, when an element is referred to as being "directly connected" or "directly paired" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular example embodiments only and is not intended to be limiting of the inventive concepts. As used herein, the singular forms "a," "an" and "the" are intended to include the plural forms as well, unless the context clearly indicates otherwise. It will be further understood that the terms "comprises," "comprising," "includes," and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

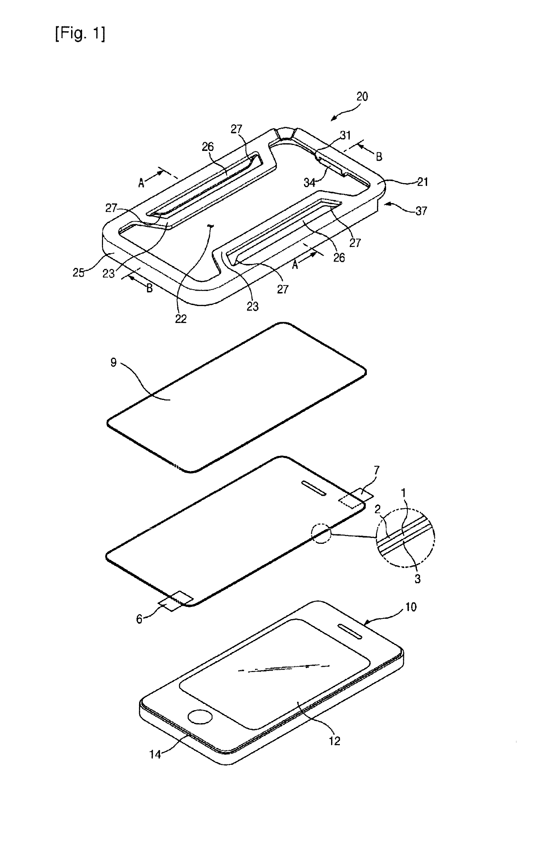

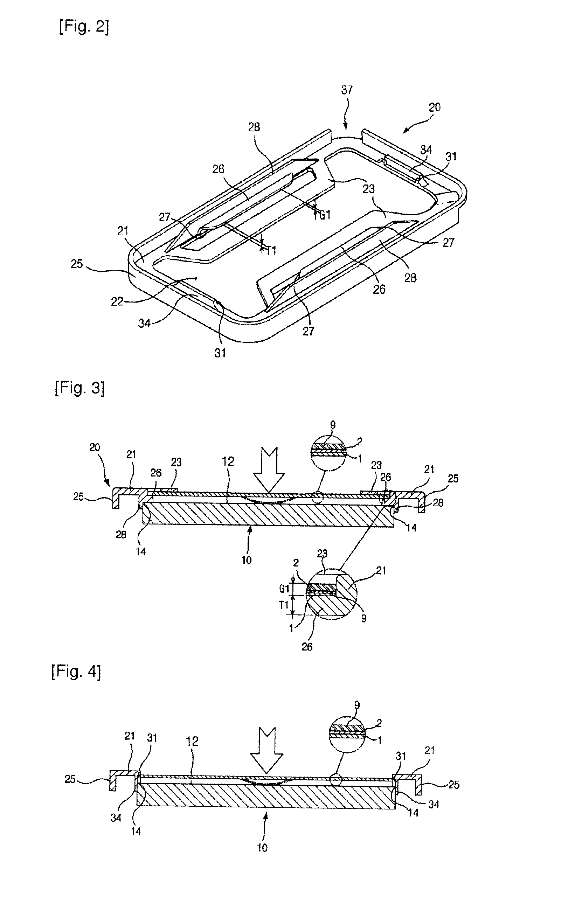

FIG. 1 is an exploded perspective view illustrating an apparatus for attaching a protection film according to an exemplary embodiment of the inventive concept, a module including the same, and a smart phone, and FIG 2 is a perspective view illustrating a rear view of the apparatus for attaching a protection film of FIG. 1. Referring to FIGS. 1 and 2, the apparatus for attaching a protection film 20 is an injection molding material formed in one body by an injection molding with synthetic resins and safely disposed on the smart phone 10 having a display panel 12 while loading a protection film 1. The illustrated apparatus for attaching a protection film 20 is to be attached to the display panel 12 which is the front of the smart phone 10, but the embodiment is not restricted to the smart phone 10 and may be applied to all the electronic devices including a display panel, such as a tablet PC, or the like.

The apparatus for attaching a protection film 20 includes a frame 21, a frame reinforcement unit 25, a first vertical wall 28, a second vertical wall 34, a first spacer 26, and a protection film holder 23. The present invention may further include a second spacer 31. At this time, although each one pair of first vertical walls 28, second vertical walls 34, first spacers 26, second spacers 31, and protection film holders 23 are illustrated and exampled, the embodiment may not restricted thereto, and each one of them or several numbers of them may be embodied.

The frame 21 has a shape corresponding to the outline of the smart phone 10. At this time, the frame 21 is the shape of looped curve or having at least one open part, that is, the shape having curved rectangular corners, which has a slightly larger size than the smart phone 10 and an open window 22 exposing the display panel.

The frame reinforcement unit 25 is vertically extended portion from the outline of the frame 21 downward and reinforces the hardness of the frame 25 so as to restrain frame bending. The apparatus for attaching a protection film 20 may be handled easily with one hand by grasping with the thumb and at least one finger among the rest four fingers.

A pair of first vertical walls 28 are prepared in straight sections facing with each other that are relatively long among the four-direction straight sections of the frame 21, and a pair of second vertical walls 34 are prepared in straight sections facing with each other that are relatively short among the four-direction straight sections of the frame 21. The first and the second vertical walls 28, 34 are protruded down from the frame 21 to the smart phone 10 such that the frame 21 may be safely disposed on the smart phone 10. When the apparatus for attaching a protection film 20 covers the smart phone 10, the smart phone 10 is inserted to the inner space surrounded by the first and the second vertical walls 28,34, thereby the apparatus for attaching a protection film 20 being mounted on the smart phone 10.

A pair of first spacers 26 are protruded from the first vertical walls 28 to the inner direction horizontally. A pair of second spacers 31 are formed on the inner surface of the second vertical walls 34. When the frame 21 and the apparatus for attaching a protection film 20 are mounted on the smart phone 10, the bottom of the first spacer 26 and the bottom of the second spacer 31 are supported by the edge of the smart phone 10, thus, the frame 21 may have a distance from the smart phone 10 without contacting.

A pair of protection film holders 23 are located higher than the pair of the first spacers 26 and protruded from the frame 21 to the inner direction horizontally. A protection film 1 is mounted on the apparatus for attaching a protection film 20 by the outline being inserted between the pair of the first spacers 26 and the pair of protection film holders 23. The distance G1 between the first spacer 26 and the protection film holder 23 may be 0.5mm through 2mm such that the protection film 1 including an upper cover 2 and a bottom cover 3 may be inserted between the first spacers 26 and the protection film holders 23 easily, and the outline of the protection film 1 may not be fallen out inadvertently after being inserted between the pair of spacers 26 and the pair of protection film holders 23.

Meanwhile, an inserting sheet 9 is laid over the protection film 1 and inserted between the protection film holders 23 and the first spacers 26 together with the protection film 1 such that the outline of the protection film 1 may not to be fallen out inadvertently after being inserted between the first spacers 26 and the protection film holders 23, that is, to prevent the protection film 1 from losing the position.

The length of protrusion of the protection film holder 23 toward the center of the rectangular frame 21 is longer than the length of protrusion of the first spacer 26. The protection film 1 inserted between the first spacer 26 and the protection film holder 23 may not fall into the above of the apparatus for attaching a protection film 20 in FIG. 1 and may be mounted on the apparatus for attaching a protection film 20 by being inserted in the direction toward the above of the apparatus for attaching a protection film. The length of protrusion of the protection film holder 23 is 8mm through 20 mm, and the length of protrusion of the first spacer 26 is 2mm through 7mm.

The ends of both sides of the pair of first spacers 26 are inclined such that the protection film 1 may be easily loaded or separated from the apparatus for attaching a protection film 1 and may not have damages such as scratches. Also, a groove 37 is formed at one corner of the frame reinforcement unit 25 so as not to disturb loading the protection film 1 or removing the bottom cover 3 attached to the protection film 1 on or from the apparatus for attaching a protection film 20. The groove 37 may be described again later in a method for attaching a protection film.

When the apparatus for attaching a protection film 20 and the frame 21 are mounted on the smart phone 10, the outline of the protection film 1 may be supported by the pair of first spacers 26, thereby having a distance from the display panel 12. The thickness T1 of the pair of first spacers 26 is 0.5mm through 5mm.

The protection film 1 is loaded so as to cover the open window 22 of the apparatus for attaching a protection film 20. The protection film 1 is made of synthetic resin film and attached to prevent damage or scratches on the display panel 12 and to increase visibility of the display panel 12. The bottom of the protection film 1 has adhesion so as to be attached to the display panel 12. Conventionally, a film set including a bottom cover 3 preserving adhesion of the protection film bottom and an upper cover 2 preventing contamination and damage on the protection film 1 detachably attached on each of the upper surface and rear surface of the protection film 1 is provided. The bottom cover 3 and the upper cover 2 are separated from the protection film 1 in the process of attaching the protection film 1 on the display panel 12 by using the apparatus for attaching a protection film, wherein a sticker 7 for detaching the bottom cover is attached to one corner of the bottom cover 3 and a sticker 6 for detaching the upper cover is attached to the other corner not overlapping with the one corner such that the separating operation may be performed easily. The protection film module is composed of the apparatus for attaching a protection film 20, the film set of the protection film 1, the upper film, and the bottom film, and the inserting sheet 9.

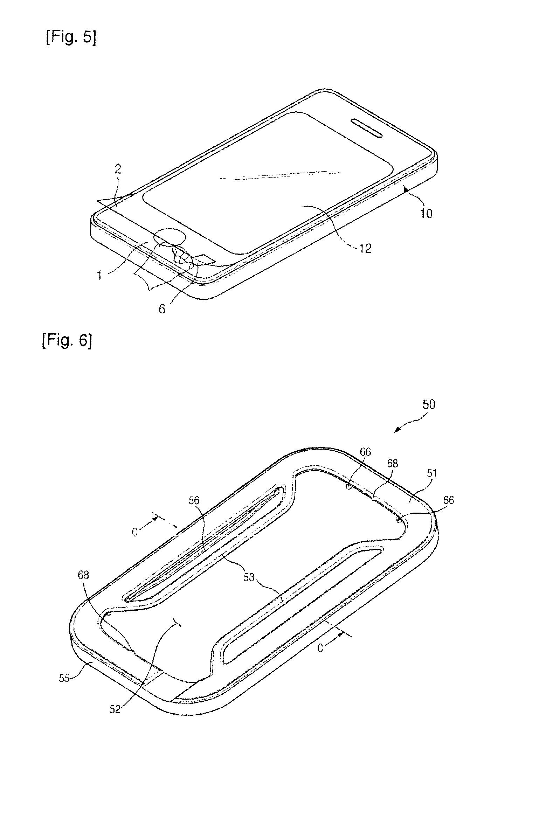

FIGS. 3 and 4 are for explaining a method of attaching a protection film by using the apparatus for attaching a protection film of FIG. 1, a sectional view along the line of A-A of FIG. 1 and a sectional view along the line of B-B of FIG. 1, respectively, and FIG. 5 is a perspective view illustrating removing the upper cover from the protection film attached on the smart phone. The method for attaching the protection film 1 on the display panel 12 includes loading the protection film 1, removing the bottom cover 3, mounting the apparatus for attaching a protection film 20, first attaching the protection film 1, removing the apparatus for attaching a protection film 20, separating the inserting sheet 9, second attaching the protection film, and removing the upper cover 2.

Referring to FIGS. 1 and 2 first, the loading the protection film 1 performs loading the film set of the protection film 1, the upper cover 2 and the bottom cover attached thereto by inserting the film set between the pair of protection film holders 23 and the pair of first spacers 26 so as not to be fallen out. At this time, the protection film 1, that is, the film set, includes the inserting sheet 9 overlapped thereon before being inserted between the pair of protection film holders 23 and the pair of first spacers 26 such that the film set may not be fallen out. The removing the bottom cover 3 includes removing the bottom cover 3 from the protection film 1 by pulling a part of the sticker 7 for removing the bottom cover attached to the film set and exposing the adhesive bottom of the protection film 1. The bottom cover 3 is relatively thin and flexible than the protection film 1, so that the bottom cover 1 may be removed from the protection film 1 in the state of the protection film 1 being loaded on the apparatus for attaching a protection film 20. The groove 37 formed on the apparatus for attaching a protection film 20 helps pulling the sticker 7 for detaching the bottom cover without interruption.

Referring to FIGS. 3 and 4, the mounting the apparatus for attaching a protection film 20 includes disposing the smart phone 10 inside the pair of first vertical walls 28 and the pair of second vertical walls 34 and disposing the apparatus for attaching a protection film 20 over the smart phone 10 such that the pair of first spacers 26 and the pair of second spacers 31 are supported by the outline 14 of the smart phone 10. At this time, the center and the outline of the protection film 1 are separated from the display panel 10 by 0.5mm through 5mm.

The first attaching the protection film 10 includes attaching the protection film 1 to the center of the display panel 12 by pushing the center of the protection film 1 into the arrow direction. The removing the apparatus for attaching a protection film 20 includes separating the apparatus for attaching a protection film 20 from the protection film 1 and taking away from the smart phone 10. The protection film 1 is attached to the display panel 12 at the center of the bottom, thus, when the frame reinforcement unit 25 is lifted by hand, only the apparatus for attaching a protection film 20 is separated from the smart phone 10, and the position of the protection film 1 about the display panel 12 may not be in disorder. The separating the inserting sheet 9 is separating the inserting sheet 9 overlapped on the protection film 1 from the protection film 1. The inserting sheet 9 may be separated easily because the inserting sheet 9 is not stick to the protection film 1 or the upper cover 2.

The second attaching the protection film 1 includes attaching the whole region of the protection film 1 to the display panel 12 expending the pressure region from the center to the peripheral region. The pressure is applied from the center to the peripheral region of the protection film 1 by pushing, thus, air between the display panel 12 and the protection film 1 is discharged to the peripheral ends of the protection film. Accordingly, air bubble formation between the display panel 12 and the protection film 1 may be controlled.

Referring to FIG. 5, the removing the upper cover 2 is separating the upper cover 2 overlapped on the protection film 1 from the protection film 1. The upper cover 2 may be detached from the protection film 1 by pulling a part of the sticker 6 for detaching the upper cover attached to the upper cover 2 without damage on the protection film 1 and without separating the protection film 1 from the display panel 12. The protection film 1 attached by using the apparatus for attaching a protection film 20 may be attached to the display panel 12 clean without losing its position about the display panel 12 and forming air bubbles.

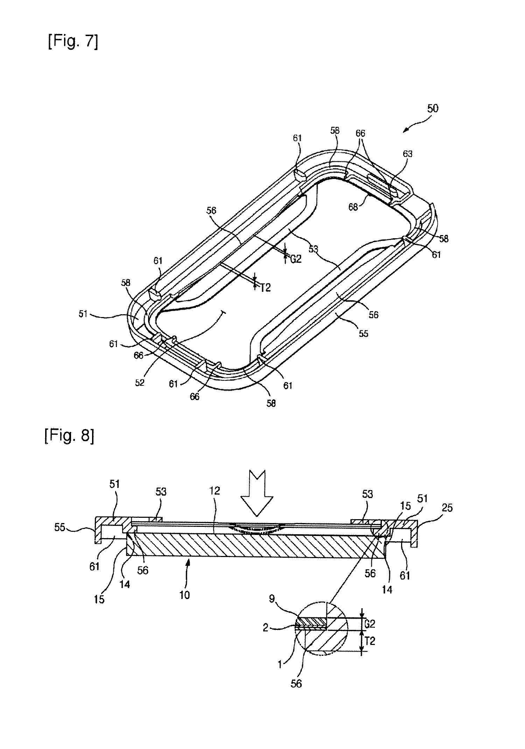

FIGS. 6 and 7 are perspective views illustrating the upper surface and the rear surface of the apparatus for attaching a protection film according to another exemplary embodiment of the inventive concept, and FIG. 8 is a diagram for explaining a method of attaching a protection film by using the apparatus for attaching a protection film of FIG. 1, a cross-sectional view of FIG. 6 along the line C-C. Referring to FIGS. 6 through 8, an apparatus for attaching a protection film 50 according to another exemplary embodiment of the inventive concept is an injection molding material formed in one body by an injection molding of synthetic resins like the apparatus for attaching a protection film 20 of FIG. 1 and safely disposed on the smart phone 10 having a display panel 12 while loading a protection film 1. The apparatus for attaching a protection film 50 includes a frame 51, a frame reinforcement portion 55, vertical walls 58, a pair of spacers 56, a pair of protection film holders 53, a first and a second position guide walls 61, 63, protrusions at the lower side 66, and protrusions at the upper side 68.

The frame 51 is disposed to fit the outline of the smart phone 10. The frame 51 is the shape of looped curve or the shape having at least one open part, which has a slightly larger size than the smart phone 10 and an open window 22 exposing the display panel. The frame reinforcement unit 55 is vertically extended portion from the outline of the frame 51 downward and reinforces the hardness of the frame 51 so as to restrain frame bending. The apparatus for attaching a protection film 50 may be handled easily with one hand by grasping with the thumb and at least one finger among the rest four fingers.

The vertical walls 58 are protruded downward from the outline of the frame 51. The vertical walls 58 are disposed around the edge 14 of the outline of the upper surface of the electronic device 10. The pair of spacers 56 are protruded from the first vertical walls 58 to the inner direction horizontally. When the apparatus for attaching a protection film 50 is mounted on the smart phone 10, the bottoms of the first spacers are supported by the edge 14 of the outline of the smart phone 10, thus, the frame 51 may have a distance from the smart phone 10 without contacting.

The pair of protection film holders 53 are located higher than the pair of the first spacers 56 and protruded from the frame 51 to the inner direction horizontally at the same height with the frame 51. A protection film 1 is loaded on the apparatus for attaching a protection film 50 by the outline being inserted between the pair of the first spacers 56 and the pair of protection film holders 53. The distance G2 between the first spacer 56 and the protection film holder 53 may be 0.5mm through 2mm such that the protection film 1 including an upper cover 2 and a bottom cover 3 may be inserted between the first spacers 56 and the protection film holders 53 easily, and the outline of the protection film 1 may not be fallen out inadvertently after being inserted between the pair of spacers 56 and the pair of protection film holders 53.

Meanwhile, an inserting sheet 9 is laid over the protection film 1 and inserted between the protection film holders 53 and the first spacers 56 together with the protection film 1 such that the outline of the protection film 1 may not to be fallen out inadvertently after being inserted between the first spacers 56 and the protection film holders 53, that is, to prevent the protection film 1 from losing the position.

The length of protrusion of the protection film holder 53 toward the center of the rectangular frame 51 is longer than the length of protrusion of the first spacer 56. The protection film 1 inserted between the first spacer 56 and the protection film holder 53 may not fall into the above of the apparatus for attaching a protection film 50 and may be loaded on the apparatus for attaching a protection film 50 by being inserted in the direction toward the above of the apparatus for attaching a protection film 50.

The first and the second position guide walls 61, 63 are located along the frame 51 separated by a proper distance such that the outline of the smart phone 10 may be inserted into the center of the apparatus for attaching a protection film 50. The frame 51 is mounted on the smart phone 10 to fit the outline of the smart phone 10 by the first and the second position guide walls 61, 63. The first position guide wall 61 has the shape of protruding from the inner surface of the frame reinforcement unit 55 to the outline of the vertical wall 58, and a terminal end of the first position guide wall 61 contacts the side surface 15 of the smart phone 10 to guide the arrangement position when the apparatus for attaching a protection film 50 is mounted on the smart phone 10. The second position guide wall 63 has the shape of protruding downward from the frame 51 and extended horizontally with the outline of the smart phone 10, and the side wall of the second position guide wall 63 contacts the side 15 of the smart phone 10 to guide the arrangement position when the apparatus for attaching a protection film 50 is mounted on the smart phone 10.

FIG. 7 shows six of the first position guide walls 61 and one of the second position guide wall 63, but the number may be changed properly. The vertical walls 58 and the pair of spacers 56 are protruded at the same height below the frame 51, but the first and the second position guide walls 61, 63 are protruded more than the vertical walls 58 from the vertical wall 58.

The plurality of lower side protrusions 66 and the upper side protrusions 68 are prepared such that the protection film 1 inserted between the pair of spacers 56 and the pair of protection film holders 53 may not fall out from the apparatus for attaching a protection film 50 inadvertently and lose its position. The upper protrusions 68 is protruded from the frame 51 to the inner direction in the region of not having a protection film holder 53. The lower protrusions 66 is formed adjacent to the upper protrusion 68 in the region of not having a protection film holder 53 with protruded from the vertical wall 58 to the inner direction. The upper protrusion 68 is located at the higher position than the lower protrusion 66 and protruded from the inner surface of the frame 51 by 0.1mm through 2mm.

When the apparatus for attaching a protection film 50 is mounted on the smart phone 10, the outline of the protection film 1 is supported by the pair of spacers 56, the protection film I has a distance from the display panel 12. The thickness T2 of the pair of spacers 56 is 0.5mm through 5mm such that the display panel 12 is separated from the protection film 1 by a proper distance.

The protection film 1 has been described in detail in the first exemplary embodiment referring to FIGS. 1 through 5, thus, the repetition of the description will be omitted. A protection film attaching module is composed of the apparatus for attaching a protection film 50, the film set including a protection film I, the upper film 2, and the bottom film 3, and an inserting sheet 9.

Hereinafter, referring to FIGS. 5 through 7, a method of attaching a protection film 1 by using the apparatus for attaching a protection film 50 according to the secondary exemplary embodiment of the inventive concept will be described. The method of attaching the protection film 1 on the display panel 12 includes loading the protection film 1, removing the bottom cover 3, mounting the apparatus for attaching a protection paper 50, first attaching the protection film 1, removing the apparatus for attaching a protection film 50, separating the inserting sheet 9, second attaching the protection film, and removing the upper cover 2, as in the first exemplary embodiment.

The loading the protection film 1 performs loading the film set of the protection film 1, the upper cover 2 and the bottom cover attached thereto by inserting between the pair of protection film holders 53 and the pair of first spacers 56 so as not to be fallen. At this time, the protection film 1, that is, the film set, includes the inserting sheet 9 overlapped thereon before being inserted between the pair of protection film holders 53 and the pair of first spacers 56. The removing the bottom cover 3 includes removing the bottom cover 3 from the protection film 1 by pulling a part of the sticker 7 (referred to FIG. 1) for removing the bottom cover attached to the film set and exposing the adhesive bottom of the protection film 1.

The mounting the apparatus for attaching a protection film 50 includes disposing the smart phone 10 inside the plurality of first and second position guide walls 61, 63 and disposing the apparatus for attaching a protection film 50 over the smart phone 10 such that the pair of first spacers 56 and the vertical wall 58 are supported by the outline 14 of the smart phone 10. At this time, the center and the outline of the protection film 1 are separated from the display panel 10 by 0.5mm through 5mm.

The first attaching the protection film 10 includes attaching the protection film 1 to the center of the display panel 12 by pushing the center of the protection film 1 into the arrow direction. The removing the apparatus for attaching a protection film 50 includes separating the apparatus for attaching a protection film 50 from the protection film 1 and taking away from the smart phone 10. The protection film 1 is attached to the display panel 12 at the center of the bottom, thus, when the frame reinforcement unit 55 is lifted by hand, only the apparatus for attaching a protection film 50 is separated from the smart phone 10, and the position of the protection film 1 about the display panel 12 may not be in disorder. The removing the inserting sheet 9 includes separating the inserting sheet 9 overlapped on the protection film 1 from the protection film 1. The inserting sheet 9 may be separated easily because the inserting sheet 9 is not stick to the protection film 1 or the upper cover 2.

The second attaching the protection film 1 includes attaching the whole region of the protection film 1 to the display panel 12 by expending the pressure region of the center to the peripheral region. The pressure is applied from the center to the peripheral region of the protection film 1 by pushing, thus, air between the display panel 12 and the protection film 1 is discharged to the peripheral ends of the protection film. Accordingly, air bubble formation between the display panel 12 and the protection film 1 may be controlled.

The removing the upper cover 2 includes separating the upper cover 2 overlapped on the protection film 1 from the protection film 1 (referred to FIG. 5). The upper cover 2 may be detached from the protection film 1 by pulling a part of the sticker 6 (referred to FIG. 5) for detaching the upper cover attached to the upper cover 2 without damage on the protection film 1 and separating the protection film 1 from the display panel 12. The protection film 1 attached by using the apparatus for attaching a protection film 50 may be attached to the display panel 12 clean without losing its position about the display panel 12 and forming air bubbles.

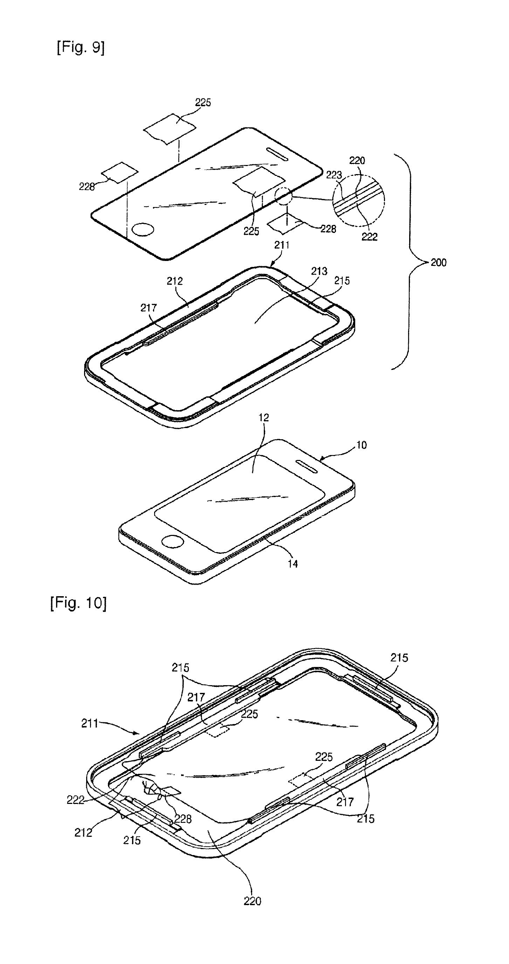

Referring to FIGS. 9 and 10, a protection film attaching module 200 according to yet another exemplary embodiment includes a frame 211 having rectangular border which is slightly larger than the shape and the size of the smart phone 10 and a protection film 220 attached detachably to the frame 211. The protection film attaching module 200 is configured to be attached to the front of the smart phone 10 having a display panel 12, but the embodiment may not be restricted for the smart phone 10 and may be applied to all the electronic devices having a display panel.

The frame 211 includes an open window 213 exposing the display panel 12 through the center of the border 212 and a plurality of supporting jaws 215 bended to be supported by the outline 14 of the smart phone 10 on the 4-way straight sections of the border 212. The frame 211 may be made of various materials, for example, plastic, paper, and metal, and, as one of the examples, may be a molding injection with plastic.

Spacers 217 are prepared on the 2-way straight sections facing each other among the 4-way straight sections of the border 212 with protruded toward the opposite straight section horizontally. The bottom of the spacers 217 are supported by the upper surface of the smart phone, that is, the surface having the display panel 12, when the frame 211 is mounted on the smart phone 10. The spacers 217 support the outline of the protection film 220. Thus, the protection film 220 is separated from the display panel 12 by a certain distance when the protection film attaching module 200 is mounted on the smart phone 10, that is, when the supporting jaw 215 of the frame 211 is supported by the outline 14 of the smart phone 10. Meanwhile, spacers may be prepared on all the 4-way straight sections unlike FIGS. 1 and 2.

The protection film 220 is attached to cover an open window 213 of the frame 211. The protection film 220 is made of transparent synthetic resins and attached to restrain damage or scratches on the display panel 12 and to increase the visibility of the display panel 12. The bottom of the protection film 220 is adhesive so as to be attached on the display panel 12. The protection film 220 is supported by spacers 217 on its outline and may have fixed position about the frame 211 due to the adhesion of its bottom unless there is strong impact. In addition, the protection film 220 may be attached to the frame 211 by using adhesive tape 225 so as to be fixed sturdier.

At this time, the supporting jaw 215 is desired to be separated from the display panel by 1 through 4mm in the upper direction when the frame 211 is mounted on the smart phone 10. That is, when the protection film 220 is mounted on the spacer 217, the protection film 220 has a distance of 1 through 4 mm from the display panel 12 horizontally. In case that the protection film 220 has a distance less than 1mm from the display panel 12, the protection film 220 may be inclined to be attached to the display panel 12 before the frame 211 completes to be fixed on the smart phone 10, that is, before being mounted on the exact position, and separating assistance 100 for attaching the protection film 100 may be difficult.

Also, in the case that the protection film 220 has a distance more than 4mm, when the center of the protection film 220 is attached to the center of the display panel 12, the edge of the protection film 220 is a way off the spacer 217, thus, there is possibility of not being attached at the right position and of containing air bubbles or foreign objects between the protection film 220 and the display panel.

Meanwhile, the length of protrusion of the spacer 217 toward the display panel is desired to be 0.5 through 4mm. When the length of protrusion of the spacer 17 is less than 0.5mm, the surface mounting the protection film 220 is so narrow that the protection film 220 may not be mounted well or held properly. Also, the length of protrusion of the spacer 217 is more than 4mm, the surface mounting the protection film 220 is so wide that the frame 211 may not be separated from the smart phone easily, thereby, generating damage on the protection film 220 or uneven surface of the protection film 220.

Meanwhile, the protection film 220 may include a bottom cover 222 for protecting adhesion on the bottom of the protection film 220 and an upper cover 223 for preventing contamination and damage on the upper surface of the protection film, which are laid on the bottom and the upper surface of the protection film 220 detachably, respectively. The film set of the bottom cover 222, the protection film 220, and the upper cover 223 are attached to the frame 211 to embody a protection film attaching module 200.

Also, a sticker 228 for detaching the bottom cover 222 may be attached on one part of the bottom of the bottom cover 222 and a sticker 227 for detaching the upper cover 223 may be attached on one part of the upper cover 223.

Hereinafter, a method of attaching the protection film 220 on the display panel 12 of the smart phone 10 by using the protection film attaching module 200 referring to FIGS. 10 through 12 will be described in detail. Referring to FIG. 10, when the protection film attaching module 200 is prepared, the bottom cover 222 is detached from the film set including the bottom cover 222, the protection film 220 and the upper cover 223 to expose the adhesive surface of the protection film 220. At this time, the bottom cover 222 may be separated from the protection film 220 by pulling the sticker 228 for detaching the bottom cover below the open window by hand.

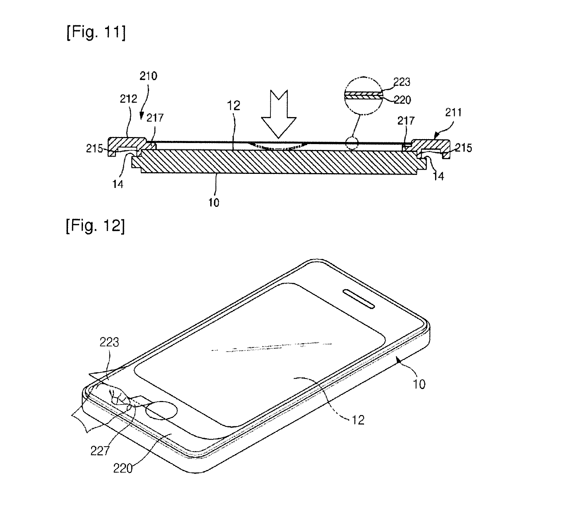

Next, the protection film attaching module 200 is mounted on the smart phone 10 such that the display panel 12 may be viewed through the protection film 220 as shown in FIG. 11. In detail, the supporting jaw 215 of the frame 211 is put down on the outline edge 14 of the smart phone 10 to dispose the supporting jaw 215 on the edge 14, and the edge 14 supports the supporting jaw 215. At this time, although the adhesive surface of the protection film 220 faces the display panel 12, the protection film 220 is being attached to the adhesive tape 225 (referred to FIG. 9) and supported by the spacer 217, thereby not being stick to the display panel 12.

Next, the protection film 220 is pushed to the display panel 12 at its center to be attached to the display panel 12. And, the adhesive tape 225 is detached from the protection film 220 and the frame 211, and the frame 211 is separated from the edge 14 of the smart phone 10 to separate the protection film 220 and the frame 211. The protection film 220 is stick to the display panel at the center of its adhesive surface, thus, the arrangement regarding to the display panel 12 may not be in disorder even though being separated from the frame 211.

And, the whole region of the protection film 220 is attached to the display panel 12, by expending the pressure region from the center to the peripheral region. The pressure is applied from the center to the peripheral region of the protection film 220 by pushing, thus, air between the display panel 12 and the protection film 220 is discharged to the peripheral ends of the protection film 220. Accordingly, air bubble formation between the display panel 12 and the protection film 220 may be controlled.

Finally, the upper cover 223 laid on the protection film 220 is separated from the upper surface of the protection film 220 as shown in FIG. 12. At this time, the upper cover 223 may be separated by pulling the sticker 227 for detaching the upper cover by hand.

The protection film 220 may be attached to the display panel 12 clean without losing its position about the display panel 12 and generating air bubbles with the method by using the protection film attaching module 200.

While the present invention has been particularly shown and described with reference to exemplary embodiments thereof, it will be understood that various changes in form and details may be made therein without departing from the spirit and scope of the following claims.

### INDUSTRIAL APPLICABILITY

The inventive concept may be used for the user interface (UI) industry by using smart phone, tablet PC, or touch screen.

## Claims

1. An apparatus for attaching a protection film comprising:
a frame to be mounted on an electronic device having a display panel to fit the outline of the electronic device and having an open window inside;
at least one spacer protruded from the frame horizontally; and
at least one protection film holder protruded from the frame to the inner direction horizontally at the higher position than the spacer for supporting the protection film by the outline being inserted between the spacer and the protection film holder, and
wherein the outline of the protection film is separated from the display panel of the electronic device by the thickness of the spacer when the frame is mounted on the electronic device.

2. The apparatus for attaching a protection film of claim 1, wherein the spacer is protruded from a vertical wall which is vertically protruded downward from the outline of the frame, and
wherein the vertical wall is disposed to be mounted on the outline edge of the upper surface of the electronic device.

3. The apparatus for attaching a protection film of claim 1, wherein the thickness of the spacer is 0.5mm through 5mm.

4. The apparatus for attaching a protection film of claim 1, wherein the apparatus further includes at least one guide wall disposed such that the outline of the electronic device may be inserted thereon, such that the frame may be safely disposed on the electronic device to fit the outline shape of the electronic device.

5. The apparatus for attaching a protection film of claim 4, wherein the spacer is protruded from the vertical wall that is protruded vertically downward from the outline of the frame, and the vertical wall is disposed to be mounted on the outline of the upper surface of the electronic device, and
wherein the position guide wall is protruded more than the vertical wall downward from the outline of the vertical wall.

6. The apparatus for attaching a protection film of claim 1, wherein the apparatus further includes an inserting sheet for preventing the protection film from losing the position by being inserted between the protection film holder and the spacer.

7. A protection film attaching module comprising:
the apparatus for attaching a protection film having any one structure of claims 1 through 5; and
a protection film to be inserted between the spacer and the protection film holder by the outline; and
wherein the outline of the protection film is separated from the display panel of the electronic device by the thickness of the spacer when the frame is mounted on the electronic device.

8. The protection film attaching module of claim 7, wherein the protection film attaching module further includes a bottom cover for preserving adhesion of the bottom of the protection film and an upper cover for restraining contamination and damage of the upper surface of the protection film; and
wherein the bottom cover and the upper cover are attached to the protection film detachably and inserted between the spacer and the protection film holder together with the protection film.

9. The protection film attaching module of claim 7, wherein the protection film attaching module further includes an inserting sheet for preventing the protection film from losing the position by being inserted between the protection film holder and the spacer together with the protection film.

10. A method of attaching a protection film on a display panel of an electronic device by using the apparatus for attaching a protection film of any one of claims 1 through 5 comprises:
loading the protection film by inserting between the protection film holder and the spacer such that the adhesive bottom of the protection film may be supported by the spacer;
mounting the apparatus for attaching a protection film on the electronic device such that the spacer is supported by the electronic device;
first attaching the protection film attaching the center of the protection film to the center of the display panel by pushing the center of the protection film to the electronic device;
removing the apparatus for attaching a protection film removing the apparatus for attaching a protection film from the protection film and taking away from the electronic device; and
second attaching the protection film attaching the whole region of the protection film to the display panel by expanding the pressure region from the center to the peripheral region.

11. The method of attaching a protection film of claim 10, wherein the loading the protection film includes loading a film set of the protection film, the bottom cover preserving the adhesion of the bottom of the protection film, and the upper cover restraining contamination and damage on the upper surface of the protection film attached to the protection film detachably, and
wherein the method further includes removing the bottom cover from the bottom of the protection film before mounting the apparatus for attaching a protection film and removing the upper cover from the upper surface of the protection film after the second attaching the protection film.

12. The method of attaching a protection film of claim 10, wherein the loading the protection film includes inserting the inserting sheet being laid on the protection film between the protection film holder and the spacer, and
wherein the method further includes removing the inserting sheet from the protection film after the separating the apparatus for attaching a protection film.

13. A protection film attaching module comprising:
a frame including a jaw bended so as to be supported by the outline edge of the electronic device having a display panel and an open window exposing the display panel; and
a protection film attached to the frame detachably so as to cover the open window,
wherein the peripheral end of the protection film is separated by a certain distance without sticking to the display panel when the jaw is supported by the outline edge of the electronic device.

14. The protection film attaching module of claim 13, wherein the frame further includes a spacer for separating the protection film from the display panel by supporting the peripheral end of the protection film when the jaw is supported by the outline edge of the electronic device.

15. The protection film attaching module of claim 13, wherein the protection film is attached to the frame by adhesive tape.

16. The protection film attaching module of claim 13, wherein the module includes a film set of the protection film, a bottom cover for preserving the adhesive bottom of the protection film, and an upper cover for restrain contamination and damage on the upper surface of the protection film, which are laid on the protection film detachably.

17. A method of attaching a protection film comprises;
preparing a protection film attaching module including an apparatus for attaching a protection film having bended jaws and an open window of the size corresponding to a display panel and a protection film attached to the apparatus for attaching a protection film so as to cover the open window;
loading a frame by disposing the jaw on the outline edge of the electronic device such that the protection film may face the display panel while having a distance; attaching the center of the protection film to the display panel by pushing to the display panel;
removing the frame from the protection film and taking away from the electronic device; and
attaching the whole region of the protection film on the display panel by expending the pressure region from the center to the peripheral region of the protection film.

18. The method of claim 17, wherein the preparing a protection film attaching module includes attaching a film set of the protection film, a bottom cover preserving adhesion of the bottom of the protection film, and an upper cover restraining contamination and damage of the upper surface of the protection film, which are laid on the protection film detachably, to the frame, and
wherein the method further includes removing the bottom cover from the bottom of the protection film before mounting the frame and removing the upper cover from the upper surface of the protection film after attaching the whole region of the protection film.

19. An apparatus for attaching a protection film for attaching a protection film to a display unit of a mobile device comprising:
a frame disposing on the outline of the display unit of the mobile device and having a hollow part to expose the display unit; and
a protection film mounting unit that is protruded from the inner surface of the hallow part and separated from the display unit by 1 through 4mm in the upper direction when the frame is mounted on the mobile device.
